# EUROPEAN PATENT APPLICATION

(11) **EP 4 201 275 A1**
(43) Date of publication of application: **28.06.2023**
(21) Application number: 21903793.4
(22) Date of filing: 07.12.2021
(51) Int. Cl.: A47J 36/32, G06Q 50/10

(54) **ELECTRONIC APPARATUS AND CONTROL METHOD THEREOF**

(30) Priority: 10.12.2020 KR 20200172243
(71) Applicant: Samsung Electronics Co., Ltd., Suwon-si, Gyeonggi-do 16677 (KR)
(72) Inventor: KIM, Sanga, Suwon-si, Gyeonggi-do 16677 (KR); HAN, Najeong, Suwon-si, Gyeonggi-do 16677 (KR); KA, Keehwan, Suwon-si, Gyeonggi-do 16677 (KR); KIM, Sunhyung, Suwon-si, Gyeonggi-do 16677 (KR); KIM, Yeonghyeok, Suwon-si, Gyeonggi-do 16677 (KR); LEE, Seoyeon, Suwon-si, Gyeonggi-do 16677 (KR)
(74) Representative: Gulde & Partner
(86) International application number: PCT/KR2021/018403
(87) International publication number: WO 2022/124747

(57) **Abstract**

An electronic apparatus configured to control a plurality of cooking apparatuses is provided. The electronic apparatus includes a communication interface, and a processor configured to control the plurality of cooking apparatuses through the communication interface, and provide information to a user terminal apparatus, and the processor is configured to generate, based on receiving a user command of selecting a plurality of recipes, a comprehensive recipe guide to uniformly perform cooking according to the plurality of recipes using the plurality of cooking apparatuses, and provide a guide message according to the comprehensive recipe guide to the user terminal apparatus, and control the plurality of cooking apparatuses based on an order and cooking time provided in the comprehensive recipe guide.

## Description

### Technical Field

The disclosure relates to an electronic apparatus and a control method thereof. More particularly, the disclosure relates to an electronic apparatus configured to control various kitchen apparatuses which include cooking apparatuses and a control method thereof.

### Background Art

With the development of electronic technologies, electronic products of various types are under development and supplied, and electronic apparatuses provided with various communication functions are being widely used in most typical households. Further, various utilization methods for enhancing user convenience are under development due to communication function being provided in even electronic products of the related art which had no communication function.

In particular, recently, various kitchen systems for improving a cooking environment of a user are being development and a service is being provided.

### Disclosure of Invention

### Technical Problem

However, when a user intends to cook several recipes simultaneously, because there is difficulty in providing the user with a guide on an optimized cooking order while simultaneously performing cooking on several recipes uniformly by automatically controlling cooking apparatuses used in the cooking, there has been a limit to enhancing user convenience.

### Solution to Problem

Aspects of the disclosure are to address at least the above-mentioned problems and/or disadvantages and to provide at least the advantages described below. Accordingly, an aspect of the disclosure is to provide an electronic apparatus configured to control various kitchen apparatuses which provide a guide message for performing cooking to the user while simultaneously including a cooking apparatus based on a usable cooking apparatus and information on a plurality of recipes which is a subject of cooking and a control method thereof.

According to an embodiment, an electronic apparatus configured to control a plurality of cooking apparatuses includes a communication interface, and a processor configured to control the plurality of cooking apparatuses through the communication interface and provide information to a user terminal apparatus, and the processor is configured to generate, based on receiving a user command of selecting a plurality of recipes, a comprehensive recipe guide to uniformly perform cooking according to the plurality of recipes using the plurality of cooking apparatuses, and provide a guide message according to the comprehensive recipe guide to the user terminal apparatus, and control the plurality of cooking apparatuses based on an order and cooking time provided in the comprehensive recipe guide.

The processor may be configured to set, based on a characteristic of a cuisine which is created based on the plurality of recipes, a priority order of the respective recipes, and decide a completion order of the plurality of recipes differently according to the priority order.

The processor may be configured to provide a search result to the user terminal apparatus by searching cooking apparatuses capable of communicating with the user terminal apparatus, receive a selection command on the plurality of cooking apparatuses from among the searched cooking apparatuses, and generate a recipe list including recipes cookable by the plurality of cooking apparatuses selected by the selection command.

The processor may be configured to provide, to the user terminal apparatus, a guide message to guide a user action in a preparation section which requires the user action in the comprehensive recipe guide, and control, based on a cooking section which requires an operation of at least one cooking apparatus guide being started in the comprehensive recipe, the communication interface to transmit a control signal on the at least one cooking apparatus.

The processor may be configured to obtain private user information from a server through the communication interface, generate a user customized recipe by modifying a standard recipe for respective foods based on the private user information, and the recipe list may include the user customized recipe.

The private user information may include at least one from among food preferences of a user, health information, information on items possessed, and activity information.

The processor may be configured to determine, based on recipe information of the respective recipes, a soiling degree of cooking tools and dishes used in cooking according to the comprehensive recipe guide, and control a dish washer to perform a wash operation according to a wash course of the dish washer corresponding to the soiling degree of the respective cooking tools and dishes.

The processor may be configured to control the dish washer to set a wash course corresponding to a highest soiling degree from among the determined soiling degrees.

The processor may be configured to provide, to the user terminal apparatus, a guide message guiding the cooking tools and the dishes to be arranged in different areas in the dish washer according to the determined soiling degree, and control the dish washer to set a wash course corresponding to the soiling degree by the respective areas in the dish washer.

According to an embodiment, a control method of an electronic apparatus configured to control a plurality of cooking apparatuses includes generating, based on a plurality of recipes being selected, a comprehensive recipe guide to uniformly perform cooking according to the plurality of recipes using the plurality of cooking apparatuses, and providing a guide message according to the comprehensive recipe guide and controlling the plurality of cooking apparatuses based on an order and cooking time provided in the comprehensive recipe guide.

The generating the comprehensive recipe guide may include setting, based on a characteristic of a cuisine which is made based on the plurality of recipes, a priority order of the respective recipes, and deciding a completion order of the plurality of recipes differently according to the priority order.

The control method may further include providing a search result by searching cooking apparatuses capable of communicating with the electronic apparatus, receiving a selection command on the plurality of cooking apparatuses from among the searched cooking apparatuses, and generating a recipe list including recipes cookable by the plurality of cooking apparatuses selected by the selection command.

The controlling the plurality of cooking apparatuses may include providing a guide message to guide a user action in a preparation section which requires the user action in the comprehensive recipe guide, and transmitting, based on a cooking section which requires an operation of at least one cooking apparatus being started in the comprehensive recipe guide, a control signal on the at least one cooking apparatus.

The control method may include obtaining private user information, and generating a user customized recipe by modifying a standard recipe for respective foods based on the private user information, and the recipe list may include the user customized recipe.

The private user information may include at least one from among food preferences of a user, health information, information on items possessed, and activity information.

The control method may further include determining, based on recipe information of the respective recipes, a soiling degree of cooking tools and dishes used in cooking according to the comprehensive recipe guide, and controlling a dish washer to perform a wash operation according to a wash course of the dish washer corresponding to the soiling degree of the respective cooking tools and dishes.

The controlling the dish washer may include controlling the dish washer to set a wash course corresponding to a highest soiling degree from among the determined soiling degrees.

The control method may further include providing a guide message guiding the cooking tools and the dishes to be arranged in different areas in the dish washer according to the determined soiling degree, and the controlling the dish washer may include controlling the dish washer to set a wash course corresponding to the soiling degree by the respective areas in the dish washer.

According to an embodiment, a computer readable recording medium stored with a program to control an electronic apparatus configured to control a plurality of cooking apparatuses includes generating, by the program, a comprehensive recipe guide to uniformly perform cooking according to a plurality of recipes using the plurality of cooking apparatuses based on the plurality of recipes being selected, and providing a guide message according to the comprehensive recipe guide and controlling the plurality of cooking apparatuses based on an order and cooking time provided in the comprehensive recipe guide.

### Brief Description of Drawings

FIG. 1 is a diagram illustrating an electronic system according to an embodiment;
FIG. 2 is a block diagram illustrating a configuration of an electronic apparatus according to an embodiment;
FIG. 3 is a block diagram illustrating an example of a detailed configuration of an electronic apparatus according to an embodiment;
FIG. 4 is a sequence diagram illustrating an operation of an electronic apparatus controlling a user terminal apparatus and a cooking apparatus according to an embodiment;
FIG. 5 is a diagram illustrating a method of generating a comprehensive recipe guide according to an embodiment;
FIG. 6 is a sequence diagram illustrating an operation of an electronic apparatus providing a guide message to a user terminal apparatus according to a comprehensive recipe guide and transmitting a control signal to respective cooking apparatuses according to an embodiment;
FIG. 7 is a flowchart illustrating a detailed operation of a user terminal apparatus according to an embodiment;
FIG. 8 is a diagram illustrating an example of a UI for receiving input of a user command of selecting a plurality of recipes provided in the user terminal apparatus of FIG. 7;
FIG. 9 is a diagram illustrating an example of a UI associated with a generating option of a comprehensive recipe guide provided in the user terminal apparatus of FIG. 7;
FIG. 10 is a flowchart illustrating a detailed operation of an electronic apparatus according to an embodiment;
FIG. 11 is a sequence diagram illustrating an operation of an electronic apparatus providing a comprehensive recipe guide to a first cooking apparatus capable of providing a guide message to the user, and transmitting, based on the first cooking apparatus transmitting information on a change in progress step to the electronic apparatus as a cooking step according to the comprehensive recipe guide is changed, a control signal to another cooking apparatus by the electronic apparatus according to an embodiment;
FIG. 12 is a sequence diagram illustrating an operation of an electronic apparatus providing a comprehensive recipe guide to a first cooking apparatus capable of providing a guide message to a user, and a first cooking apparatus transmitting information on a change in progress step to the electronic apparatus only when there is a need for control of another cooking apparatus when changing a cooking step based on the comprehensive recipe guide according to an embodiment;
FIG. 13 is a sequence diagram illustrating an operation of a first cooking apparatus transmitting a control signal to another cooking apparatus according to a comprehensive recipe guide when an electronic apparatus provides the comprehensive recipe guide to the first cooking apparatus according to an embodiment;
FIG. 14 is a diagram illustrating an example of a first guide message UI which is provided in FIG. 6;
FIG. 15 is a diagram illustrating an example of a second guide message UI which is provided in FIG. 6;
FIG. 16 is a diagram illustrating an example of a third guide message UI which is provided in FIG. 6;
FIG. 17 is a diagram illustrating an example of a fourth guide message UI which is provided in FIG. 6;
FIG. 18 is a diagram illustrating a control on a cooking apparatus by an electronic apparatus according to an embodiment;
FIG. 19 is a diagram illustrating a method of generating a user customized recipe according to an embodiment;
FIG. 20 is a flowchart illustrating a control method of an electronic apparatus according to an embodiment;
FIG. 21 is a sequence diagram illustrating an operation of an electronic apparatus providing a guide message to a user terminal apparatus by deciding a wash course according to a determination on a soiling degree, and transmitting a control signal to a dish washer according to an embodiment;
FIG. 22 is a sequence diagram illustrating an example of an electronic apparatus providing a guide message through a dish washer according to an embodiment;
FIG. 23 is a sequence diagram illustrating an example of an electronic apparatus providing a guide message through a user terminal apparatus, and transmitting information on a wash course to a dish washer according to an embodiment;
FIG. 24 is a sequence diagram illustrating an example of an electronic apparatus transmitting a guide message and information on a wash course to a user terminal apparatus, and the user terminal apparatus transmitting a control signal corresponding thereto to a dish washer according to an embodiment; and
FIG. 25 is a flowchart illustrating a control method of controlling a dish washer by an electronic apparatus according to an embodiment.

### Mode for the Invention

Embodiments described herein have been provided as an example to assist in the understanding of the disclosure, and unlike the embodiments described herein, it should be understood that various changes and modifications may be made to the disclosure. However , in describing the embodiments, in case it is determined that detailed description of related known technologies may unnecessarily confuse the gist of the disclosure, the detailed description will be omitted. Further, the accompanied drawings may be illustrated so that sizes of some elements are exaggerated rather than illustrated to its actual scale for convenience of description.

Terms used in describing the various embodiments of the disclosure are general terms selected considering their function herein. However, the terms may change depending on intention, legal or technical interpretation, emergence of new technologies, and the like of those skilled in the related art. Further, in certain cases, there may be terms arbitrarily selected. In this case, the meaning of the term may be interpreted to the meaning defined herein, and if there is no specific meaning of the term defined, it may be interpreted based on the overall context of the disclosure and the technical common sense according to the related art.

In describing the disclosure, the order of each step is to be understood as non-limiting unless the order of each step needs to be performed such that a preceding step must be performed logically and temporally prior to a following step. That is, except for exceptional cases as described above, even if a process described as the following step is performed preceding a process described as the preceding step, it does not influence the nature of the disclosure and the scope of protection should also be defined regardless of the order of the step.

In the disclosure, expressions such as "comprise," "may comprise," "include," "may include," or the like are used to designate a presence of a corresponding characteristic (e.g., elements such as numerical value, function, operation, or component, etc.), and not to preclude a presence or a possibility of additional characteristics.

Terms such as "first," and "second" may be used in describing the various example elements, but the elements are not to be limited by the terms. The terms may be used only to distinguish one element from another. For example, a first element may be designated as a second element, and likewise, a second element may also be designated as a first element without exceeding the scope of protection.

Further, because the elements necessary in describing the respective embodiments of the disclosure are described, the disclosure is not necessarily limited hereto. Accordingly, some elements may be changed or omitted, and other elements may be added. In addition, the elements may be distributed and disposed in devices independent from one another.

Further, although the embodiments of the disclosure have been described in detail with reference to the accompanying drawings and the descriptions disclosed in the accompanying drawings, the disclosure is not limited by or limited to the embodiments.

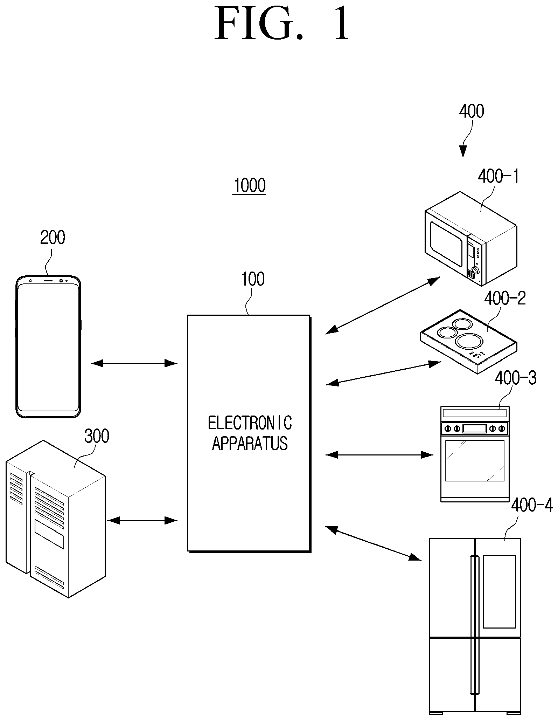

The disclosure will be described in detail below with reference to FIG. 1 to FIG. 22.

FIG. 1 is a diagram illustrating an electronic system according to an embodiment of the disclosure.

Referring to FIG. 1, an electronic system 1000 may include an electronic apparatus 100, a user terminal apparatus 200, a server 300, and various cooking apparatuses 400.

The electronic apparatus 100 may be configured to receive a user command of selecting a recipe which is a subject of cooking from the user terminal apparatus 200, and obtain information associated with the recipe and information associated with the cooking apparatus from the server 300. For example, the electronic apparatus 100 may be configured to provide a cookable recipe list to the user terminal apparatus 200 based on the cooking apparatus possessed by a user, and obtain information associated with the recipe selected by the user and information associated with the cooking apparatus possessed by the user in the recipe list from the server 300.

The electronic apparatus 100 may be configured to use a plurality of cooking apparatuses 400 based on the obtained information to generate a comprehensive recipe guide for uniformly performing cooking according to the plurality of recipes, and provide a guide message according to the comprehensive recipe guide to the user terminal apparatus 200 while simultaneously control the plurality of cooking apparatuses 400. The detailed description associated therewith will be described below.

That is, the electronic apparatus 100 may be an apparatus configured to generate a comprehensive recipe guide and provide information to the user while simultaneously controlling the cooking apparatus 400, and may be realized as a management server, a computer, and the like. However, the embodiment is not limited thereto, and the electronic apparatus 100 may be realized as an apparatus owned by the user such as, for example, and without limitation, a desktop personal computer (PC), a notebook, a television (TV), a smart phone, a tablet PC, a wearable device, and the like, and may be any apparatus so long as it is an apparatus capable of providing information to the user and controlling the cooking apparatus 400. In addition, the cooking apparatus 400 may be realized so as to perform a corresponding operation on its own.

The user terminal apparatus 200 may be an apparatus configured to receive a user input and transmit to the electronic apparatus 100, and provide the comprehensive recipe guide and associated information received from the electronic apparatus 100 to the user, and may be realized as a smart phone, a tablet PC, a wearable device, a desktop PC, a notebook, a TV, and the like.

However, the embodiment is not limited thereto, and the user terminal apparatus 200 may be realized as a form that provides information through a display or a speaker included in the cooking apparatus 400, and it may be any apparatus so long as it is an apparatus capable of providing information to the user

The server 300 may be an apparatus configured to obtain information associated with the recipe and information associated with the cooking apparatus, and provide the obtained information to the electronic apparatus 100. For example, the server 300 may be a recipe server configured to obtain information on various recipes. Alternatively, the server 300 may be a cooking apparatus information server configured to obtain information on various cooking apparatuses.

In addition, the server 300 may include an apparatus configured to obtain private user information, and provide the obtained information to the electronic apparatus 100. For example, the server 300 may be a schedule server configured to obtain schedule information of the user. Alternatively, the server 300 may be a health information server configured to obtain health information of the user.

The server 300 described above may be realized individually, or may be realized as one integrated server.

The cooking apparatus 400 may be various apparatuses necessary for cooking and performing operations associated therewith. For example, the cooking apparatus 400 may be an apparatus used, by the user, for performing cooking such as a microwave oven (i.e., a first cooking apparatus) 400-1, an induction oven (i.e., a second cooking apparatus) 400-2, or an oven (i.e., a third cooking apparatus) 400-3, or may be an apparatus for storing food items such as a refrigerator 400-4. In addition, the cooking apparatus 400 may include a kitchen hood configured to suction smoke generated when cooking, and include various home appliances used in the kitchen such as a dish washer configured to automatically clean and dry cooking tools and dishes such as plates which are used in the cooking process and soiled.

Accordingly, the electronic apparatus 100 may be configured to use the plurality of cooking apparatuses 400 to generate a comprehensive recipe guide for uniformly performing cooking according to the plurality of recipes, and provide the guide message according to the comprehensive recipe guide to the user terminal apparatus 200 while simultaneously controlling the plurality of cooking apparatuses 400.

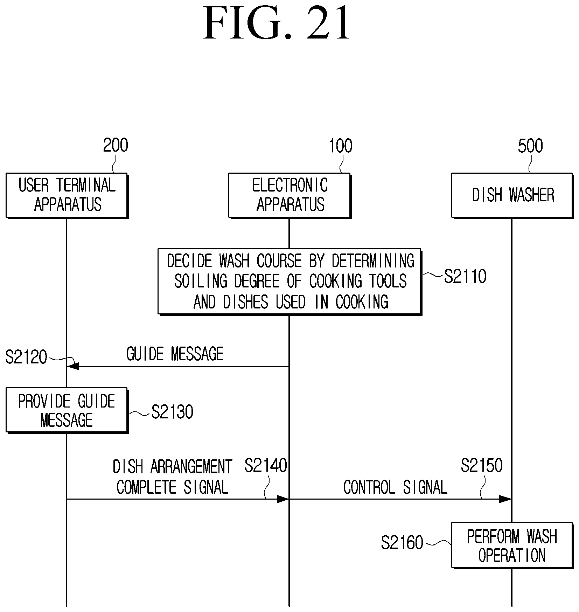

The electronic apparatus according to an embodiment may be configured to automatically set a wash course of the dish washer according to a soiling degree of the cooking tools and the dishes and control the dish washer to perform a washing operation. The detailed description on the control of the dish washer of the electronic apparatus according to an embodiment will be described below in FIG. 21 to FIG. 22.

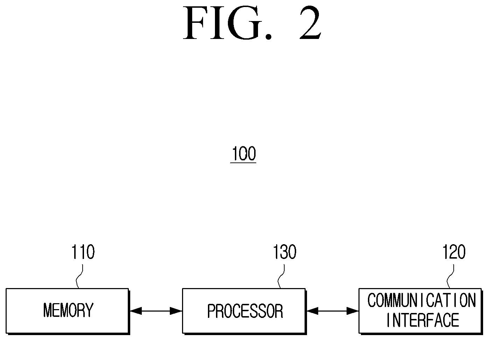

FIG. 2 is a block diagram illustrating a configuration of an electronic apparatus according to an embodiment of the disclosure.

Referring to FIG. 2, an electronic apparatus 100 may include a memory 110, a communication interface 120, and a processor 130.

The memory 110 may refer to a hardware configured to store information such as data in an electric or magnetic form for the processor 130 and the like to access. To this end, the memory 110 may be realized as at least one hardware from among, a non-volatile memory, a volatile memory, a flash memory, a hard disk drive (HDD) or a solid state drive (SSD), a random access memory (RAM), a read only memory (ROM), and the like.

The memory 110 may be stored with at least one instruction or a module necessary in the operation of the electronic apparatus 100 or the processor 130. Here, the instruction may be a code unit instructing an operation of the electronic apparatus 100 or the processor 130, and may be prepared in a machine language which is a language that is understood by a computer. The module may be a series of instruction sets performing a specific task of a task unit.

The memory 110 may be configured to store bits capable of representing characters, numbers, images, and the like or data which is information of a byte unit.

For example, the memory 110 may be stored with information on the plurality of recipes selected by the user, and information on the cooking apparatus 400 possessed by the user. In addition, the memory 110 may be stored with the comprehensive recipe guide for uniformly performing cooking according to the plurality of recipes using the plurality of cooking apparatuses 400.

The memory 110 may be accessed by the processor 130 and reading/writing/modifying/deleting/updating of instructions, modules or data by the processor 130 may be performed.

The communication interface 120 may be a configuration performing communication with an external apparatus of various types according to a communication method of various types. For example, the electronic apparatus 100 may be configured to perform communication with the user terminal apparatus 200, the server 300, and the cooking apparatus 400 through the communication interface 120.

The communication interface 120 may include a Wi-Fi module, a Bluetooth module, an infrared communication module, a wireless communication module, and the like. Here, the respective communication modules may be realized to at least one hardware chip form.

The Wi-Fi module and the Bluetooth module may be configured to perform communication in the Wi-Fi method and the Bluetooth method, respectively. When using the Wi-Fi module or the Bluetooth module, various connection information such as service set identifier (SSID) and session key may be first transmitted and received, and after establishing communication using the above, various information may be transmitted and received. The infrared communication module may be configured to use infrared rays present between visible rays and millimeter-waves to perform communication according to Infrared Data Association (IrDA) technology which transmits data wirelessly at a short distance.

The wireless communication module may include at least one communication chip configured to perform communication according to various wireless communication standards such as, for example, and without limitation, ZigBee, 3rd Generation (3G), 3rd Generation Partnership Project (3GPP), Long Term Evolution (LTE), LTE-advanced (LTE-A), 4th Generation (4G), 5th Generation (5G), and the like in addition to the above-described communication methods.

Alternatively, the communication interface 120 may include a wired communication interface such as, for example, and without limitation, high definition multimedia interface (HDMI), display port (DP), Thunderbolt, universal serial bus (USB), red, green, and blue (RGB), D-subminiature (D-SUB), digital visual interface (DVI), and the like.

In addition thereto, the communication interface 120 may include at least one from among the wired communication modules performing communication by using a local area network (LAN) module, an Ethernet module, a pair cable, a coaxial cable, an optical fiber cable, or the like.

The processor 130 may be configured to control the overall operation of the electronic apparatus 100. Specifically, the processor 130 may be configured to control the overall operation of the electronic apparatus 100 by being connected with the respective configurations of the electronic apparatus 100. For example, the processor 130 may be configured to control an operation of the electronic apparatus 100 by being connected with configurations such as the memory 110 and communication interface 120.

The processor 130 may be realized as a digital signal processor (DSP), a microprocessor, and a time controller (TCON). However, the embodiment is not limited thereto, and may include, for example, and without limitation, one or more from among a central processing unit (CPU), a micro controller unit (MCU), a micro processing unit (MPU), a controller, an application processor (AP), a communication processor (CP), an advanced reduced instruction set computer (RISC) machine (ARM) processor, or the like, or may be defined by the corresponding term. In addition, the processor 130 may be realized as a System on Chip (SoC) or large scale integration (LSI) embedded with a processing algorithm, and may be realized in the form of a field programmable gate array (FPGA).

The processor 130 may be configured to control the communication interface 120 so as to provide the recipe list cookable by the plurality of usable cooking apparatuses 400 to the user terminal apparatus 200.

For example, the processor 130 may be configured to receive information associated with the recipe and information associated with the cooking apparatus 400 from the server 300 possessed by the user, and generate, based on the received information, a list on the cookable recipes using the cooking apparatus 400 possessed by the user and provide the list to the user terminal apparatus 200.

The processor 130 may be configured to receive the user command of selecting the plurality of recipes from among the recipe list and generate a comprehensive recipe guide for uniformly performing cooking according to the plurality of selected recipes using the plurality of cooking apparatuses 400.

In addition, the processor 130 may be configured to provide the guide message according to the comprehensive recipe guide to the user terminal apparatus 200, and control the plurality of cooking apparatuses 400 based on an order and cooking time provided in the comprehensive recipe guide.

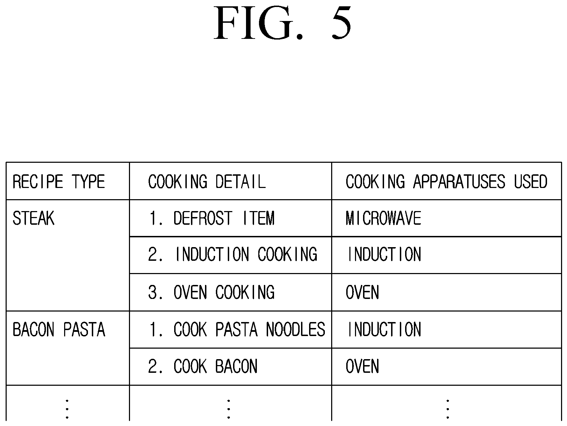

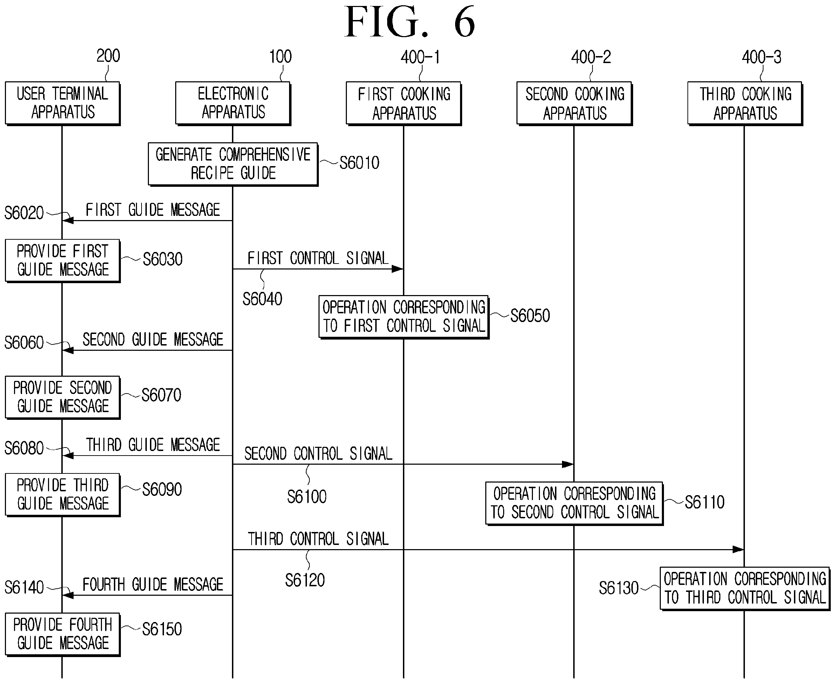

The detailed description on the operation, by processor 130, of providing the guide message to the user terminal apparatus 200 and the operation, by processor 130, of controlling the respective cooking apparatuses 400 based on the method of generating the comprehensive recipe guide and the comprehensive recipe guide will be described below in FIG. 5 and FIG. 6.

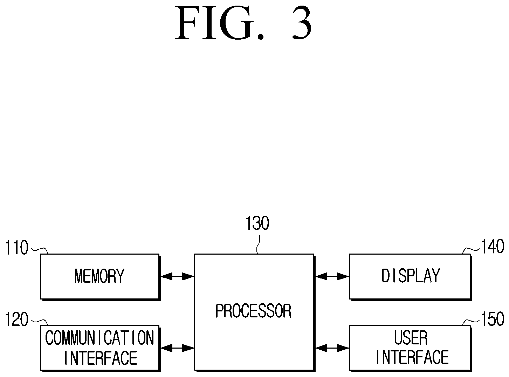

FIG. 3 is a block diagram illustrating an example of a detailed configuration of an electronic apparatus according to an embodiment of the disclosure.

Referring to FIG. 3, an electronic apparatus 100 may include a memory 110, a communication interface 120, a processor 130, a display 140, and a user interface 150. Detailed descriptions on parts overlapping with the elements illustrated in FIG. 2 from among the elements illustrated in FIG. 3 will be omitted.

The electronic apparatus 100 may be realized as an external server, but may be realized as an apparatus arranged inside a home of the user as an apparatus owned by the user. In this case, the electronic apparatus 100 may include a display 140, a user interface 150, and the like and may be configured to provide information to the user and receive the user command.

The display 140 may be realized as a display of various forms such as, for example, and without limitation, a liquid crystal display (LCD), an organic light emitting diode (OLED) display, a plasma display panel (PDP), and the like. In the display 140, a driving circuit, which may be implemented in the form of an amorphous silicon (a-si) thin film transistor (TFT), a low temperature poly silicon (LTPS) TFT, an organic TFT (OTFT), a backlight unit, and the like may be included. The display 140 may be realized as a touch screen coupled with a touch sensor, a flexible display, a three-dimensional (3D) display, and the like.

The user interface 150 may be realized with a button, a touch pad, a mouse, a keyboard, and the like, or may be realized as a touch screen capable of performing the above-described display function and an operation input function together therewith. Here, the button may be a button of various types such as, for example, and without limitation, a mechanical button, a touch pad, a wheel, or the like formed at an arbitrary area such as a front surface part, a side surface part or a back surface part of an exterior of a main body of the electronic apparatus 100.

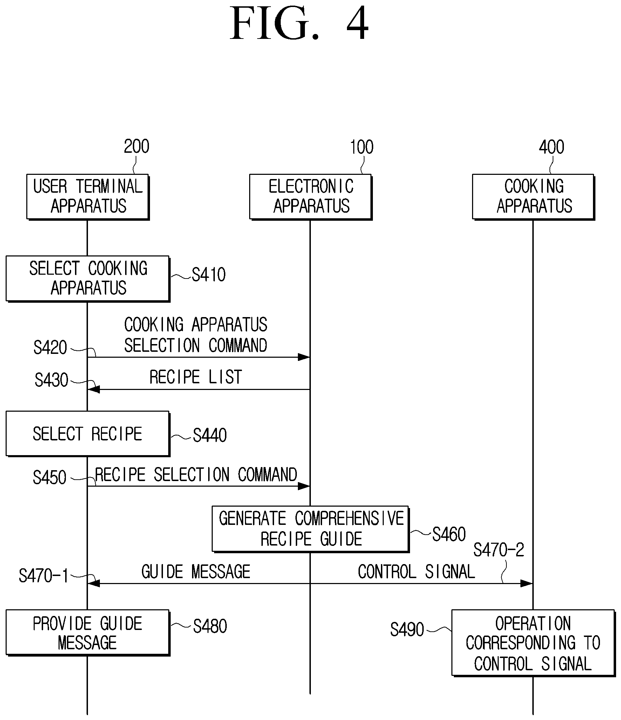

An operation of the electronic apparatus 100 will be described in detail below with reference to FIG. 4.

FIG. 4 is a sequence diagram illustrating an operation of an electronic apparatus controlling a user terminal apparatus and a cooking apparatus according to an embodiment of the disclosure.

The electronic apparatus 100 may be configured to provide information to the user terminal apparatus 200, and control the cooking apparatus 400 with the method as shown in FIG. 4.

First, the user terminal apparatus 200 may be configured to receive a selection command of selecting the cooking apparatus from the user (S410). In this case, the user may be configured to input the selection command based on the plurality of cooking apparatuses possessed by the user. The user terminal apparatus 200 may be configured to transmit the command selecting the cooking apparatus to the electronic apparatus 100 (S420).

The electronic apparatus 100 may be configured to generate a recipe list cookable by the plurality of useable cooking apparatuses and provide the recipe list to the user terminal apparatus 200 (S430), and the user terminal apparatus 200 may be configured to receive the selection command of selecting the recipe from the user (S440) and transmit the recipe selection command to the electronic apparatus 100 (S450). In this case, the user may input the user command of selecting the plurality of recipes from among the recipe list provided from the electronic apparatus 100.

Alternatively, even if the command selecting the cooking apparatus is not input by the user to the electronic apparatus 100, the electronic apparatus 100 may be configured to automatically apply information on registered devices to the cooking apparatus possessed by the user in advance. In this case, based on the user inputting the user command of selecting the plurality of recipes, a customized recipe which has been modified so as to cook with the cooking apparatus possessed by the user may be provided based on the pre-registered cooking apparatuses.

The electronic apparatus 100 may be configured to use the plurality of cooking apparatuses selected by the user to generate a comprehensive recipe guide for uniformly performing cooking according to the plurality of recipes selected by the user (S460). For example, the comprehensive recipe guide may include information on the cooking order which may minimize the time spent on cooking with respect to the plurality of recipes selected by the user and the cooking apparatus used in the respective orders, and the temperature and operation time set in the respective cooking apparatuses, and the like. The detailed description on the generation of the comprehensive recipe guide will be described below in FIG. 5.

The electronic apparatus 100 may be configured to transmit the guide message according to the comprehensive recipe guide to the user terminal apparatus 200 (S470-1) so that the user terminal apparatus 200 may provide the guide message to the user (S480).

In addition, the electronic apparatus 100 may be configured to transmit, based on the order and cooking time provided in the comprehensive recipe guide, a control signal controlling the cooking apparatus 400 to the cooking apparatus 400 (S470-2), and the cooking apparatus 400 may be configured to perform an operation corresponding to the received control signal (S490).

In this case, the electronic apparatus 100 may be configured to transmit the control signal corresponding to the respective cooking apparatuses 400 based on the comprehensive recipe guide, and the plurality of cooking apparatuses 400 may be configured to perform operations corresponding to the respective control signals. The detailed description on the operation of controlling the plurality of cooking apparatuses 400 will be described below in FIG. 6.

FIG. 5 is a diagram illustrating an example of recipe information being provided to an electronic apparatus according to an embodiment of the disclosure. A method of generating a comprehensive recipe guide by an electronic apparatus 100 will be described below with reference to the description illustrated in FIG. 5.

Here, recipe information may be information on items and methods necessary in making a specific food. For example, the recipe information may include information such as items necessary for cooking each food, cooking methods, order, and cooking apparatuses used in cooking with respect to food of various kinds.

Referring to FIG. 5, in case of recipe information on a steak, cooking details of sequentially proceeding in a step of defrosting items, a step of proceeding with induction cooking, and a step of proceeding with oven cooking may be included. Meanwhile, in case of recipe information on bacon pasta, cooking details of proceeding with a step of cooking pasta noodles and a step of cooking bacon may be included.

In addition, the recipe information may include information on cooking apparatuses used in the respecting cooking steps. For example, the recipe information may include information that a microwave is used in the step of defrosting items in the recipe information on steak, an induction is used in the step of proceeding with induction cooking, and an oven is used in the step of proceeding with oven cooking.

However, information included in the recipe information is not limited thereto, and the recipe information may be any information so long as it is information associated with the cooking method such as cooking temperature and cooking time in the respective steps of cooking. In addition, the recipe information may include information on ancillary tools other than the cooking apparatuses such as information on the cooking tools, information on the dishes, and the like, used in the cooking process.

The electronic apparatus 100 may be configured to obtain recipe information as described above from the server 300, or obtain by receiving the recipe information stored in the memory 110.

The electronic apparatus 100 may be configured to obtain the recipe information to generate a comprehensive recipe guide for uniformly performing cooking according to the plurality of recipes intended, by the user, to perform cooking.

The comprehensive recipe guide may include information on guiding the cooking order, time, method, and the like on the plurality of recipes and information for controlling the cooking apparatuses used in the cooking so as to complete cooking simultaneously according to the plurality of selected recipes or complete according to the priority order of the respective recipes based on the plurality of cooking apparatuses possessed by the user and the plurality of recipes selected by the user to perform cooking. That is, the comprehensive recipe guide may be information generated for uniformly performing cooking according to the plurality of recipes.

Specifically, the electronic apparatus 100 may be configured to use the recipe information to analyze values of the cooking apparatus, time, method, and the like necessary in cooking the plurality of recipes, adjust the cooking order so that use of the cooking apparatus is not overlapped, set a priority order of the respective recipes based on the characteristics (e.g., cuisine with warm characteristics or cuisine with cold characteristics) of the cuisine which is made based on the respective recipes, and decide a completion order of the plurality of recipes differently according to the priority order.

For example, the electronic apparatus 100 may be configured to generate a comprehensive recipe guide deciding the cooking order in a method of the warm characteristic cuisine being completed the last so that the cuisine with the warm characteristics is provided before it is cooled after completion.

In addition, the electronic apparatus 100 may be configured to obtain information on a type, weight, and the like of the food items currently possessed by the user from a smart refrigerator possessed by the user, and apply various recipe information such as deciding the cookable recipe by using the food items possessed based on food item information to the comprehensive recipe guide.

Accordingly, efficiency in cooking such as minimizing total cooking time on the plurality of recipes may be improved, and a method of cooking the respective recipes according to a priority order may be provided to the user.

FIG. 6 is a sequence diagram illustrating an operation of an electronic apparatus providing a guide message to a user terminal apparatus according to a comprehensive recipe guide and transmitting a control signal to respective cooking apparatuses according to an embodiment of the disclosure.

The electronic apparatus 100 may be configured to provide the guide message for guiding user action in a preparation section which requires user action in the comprehensive recipe guide to the user terminal apparatus 200 (S6020, S6060, S6080 and S6140), and transmit the control signal on the cooking apparatus when a cooking section requiring an operation of at least one cooking apparatus begins in the comprehensive recipe guide (S6040, S6100 and S6120).

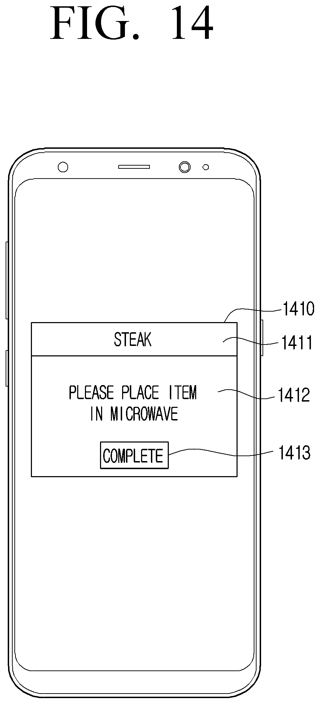

The detailed description on a guide message user interface (UI) displayed in the user terminal apparatus 200 and operations of the plurality of cooking apparatuses 400-1, 400-2 and 400-3 according to the control of the electronic apparatus 100 will be described below with reference to FIGS. 14 to 17.

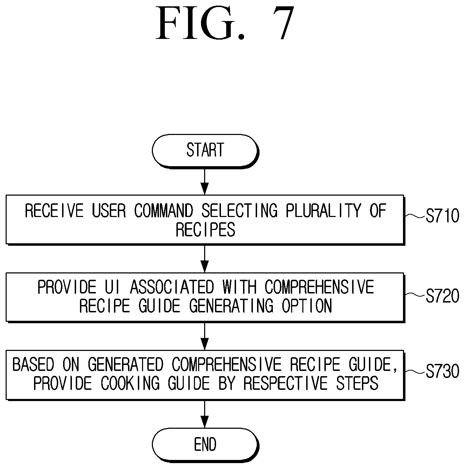

FIG. 7 is a flowchart illustrating a detailed operation of a user terminal apparatus according to an embodiment of the disclosure.

Referring to FIG. 7, a user terminal apparatus 200 may be configured to receive a user command of selecting a plurality of recipes (S710).

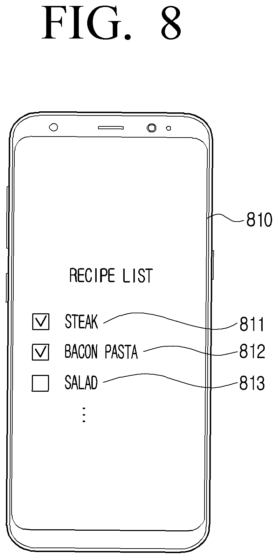

For example, referring to FIG. 8, the user terminal apparatus 200 may be configured to display a recipe list UI 810 based on the recipe list provided from the electronic apparatus 100.

The recipe list UI 810 may include various cookable recipes 811, 812, and 813 based on the cooking apparatuses possessed by the user. Accordingly, the user terminal apparatus 200 may be configured to receive the user command of selecting the plurality of recipes through the recipe list UI 810.

Further, the user terminal apparatus 200 may be configured to provide a UI associated with the comprehensive recipe guide generating option (S720).

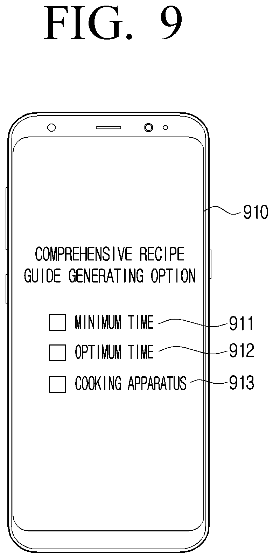

Here, the comprehensive recipe guide generating option may be an option associated with the comprehensive recipe guide generating standard. For example, referring to FIG. 9, the user terminal apparatus 200 may be configured to receive user selection on any one from among a minimum time 911, an optimum time 912, or a cooking apparatus option 913 through a comprehensive recipe guide generating option UI 910.

Based on the minimum time option 911 being selected through the comprehensive recipe guide generating option UI 910, the electronic apparatus 100 may be configured to generate a comprehensive recipe guide so that the time spent until the cooking according to the plurality of recipes is completed becomes a shortest time.

Based on an optimum time option 912 being selected, the electronic apparatus 100 may be configured to generate an optimized comprehensive recipe guide based on characteristics (e.g., cuisine with warm characteristics or cuisine with cold characteristics) of the cuisine which is made based on a recipe of the respective recipes. For example, the electronic apparatus 100 may be configured to generate a comprehensive recipe guide deciding the cooking order in a method of the warm characteristic cuisine being completed the last so that the cuisine with the warm characteristics is provided before it is cooled after completion.

Based on a cooking apparatus option 913 being selected, the electronic apparatus 100 may be configured to generate a comprehensive recipe guide based on the cooking apparatus selected by the user. In this case, based on the cooking apparatus option 913 being selected, the user terminal apparatus 200 may be configured to additionally provide the UI which may receive the user selection on some from among the plurality of cooking apparatuses possessed by the user. Accordingly, the electronic apparatus 100 may be configured to provide a comprehensive recipe guide which uses only the cooking apparatus desired by the user.

Further, the user terminal apparatus 200 may be configured to provide a cooking guide by the respective steps according to the comprehensive recipe guide generated in the electronic apparatus 100 (S730). In this case, the user terminal apparatus 200 may be configured to provide the guide message UI on the cooking guide corresponding to the respective steps. The detailed description associated therewith will be described below in FIG. 14 to FIG. 17.

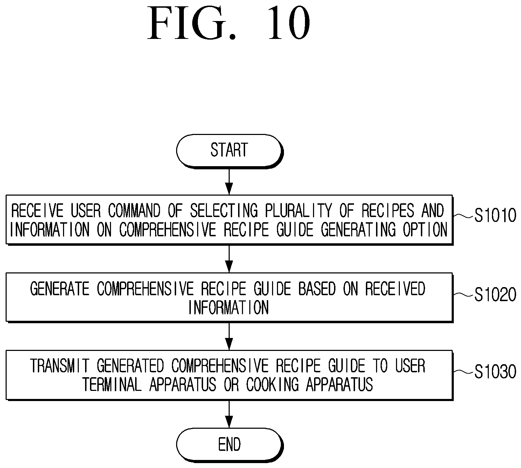

FIG. 10 is a flowchart illustrating a detailed operation of an electronic apparatus according to an embodiment of the disclosure.

Referring to FIG. 10, the electronic apparatus 100 may be configured to receive the user command of selecting the plurality of recipes and information on comprehensive recipe guide generating option (S1010). In this case, the electronic apparatus 100 may be configured to receive selected information on the plurality of recipes and selected information on comprehensive recipe guide generating option from the user terminal apparatus 200.

Further, the electronic apparatus 100 may be configured to generate a comprehensive recipe guide based on the received information (S1020). The electronic apparatus 100 may be configured to utilize an artificial intelligence (AI) model or utilize a database to generate the comprehensive recipe guide, and because the detailed description associated with the generating of the comprehensive recipe guide has been described in FIG. 5 above, the redundant description will be omitted.

Further, the electronic apparatus 100 may be configured to transmit the generated comprehensive recipe guide to the user terminal apparatus 200 or the cooking apparatus 400 (S1030). Accordingly, the user terminal apparatus 200 and the cooking apparatus 400 may be configured to provide a guide according to the comprehensive recipe guide, or perform an operation corresponding to the control operation according to the comprehensive recipe guide.

Although the guide message according to the comprehensive recipe guide being provided through the user terminal apparatus 200 has been described above as an example, the guide message may be provided through the cooking apparatus 400.

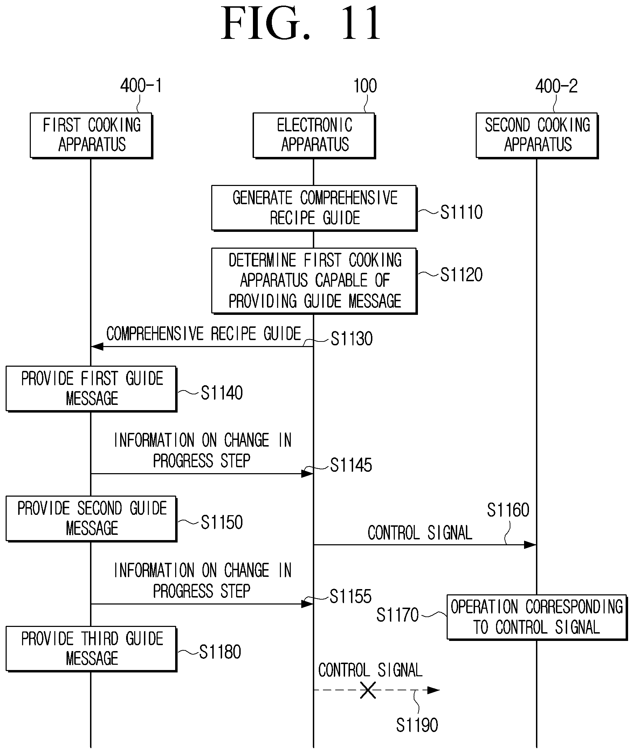

FIG. 11 is a sequence diagram illustrating an operation of an electronic apparatus providing a comprehensive recipe guide to a first cooking apparatus capable of providing a guide message to the user, and transmitting, based on the first cooking apparatus transmitting information on a change in progress step to the electronic apparatus as a cooking step according to the comprehensive recipe guide is changed, a control signal to another cooking apparatus by the electronic apparatus according to an embodiment of the disclosure.

Referring to FIG. 11, an electronic apparatus 100 may be configured to determine, after generating a comprehensive recipe guide (S 1110), a cooking apparatus capable of providing a guide message according to the comprehensive recipe guide (S 1120). Here, the cooking apparatus capable of providing the guide message may be a cooking apparatus including an output interface such as a display and a speaker.

For example, the electronic apparatus 100 may be configured to obtain information on the cooking apparatus capable of providing the guide message from among the plurality of cooking apparatuses 400 based on information on the respective cooking apparatuses possessed by the user.

Further, the electronic apparatus 100 may be configured to transmit, based on a first cooking apparatus 400-1 being determined as capable of providing the guide message, the comprehensive recipe guide to the first cooking apparatus 400-1 (S1130). In this case, the electronic apparatus 100 may not transmit the comprehensive recipe guide to a second cooking apparatus 400-2 which has been determined as not capable of providing the guide message.

The first cooking apparatus 400-1 may be configured to provide the first guide message to the user based on the comprehensive recipe guide received from the electronic apparatus 100 (S1140). In this case, the first guide message may be a guide message corresponding to a first cooking step of the cooking guide which is provided by the respective steps according to the comprehensive recipe guide. Further, the first cooking apparatus 400-1 may be configured to provide the second guide message corresponding to a second cooking step, and the third guide message corresponding to a third cooking step (S1150 and S1180).

The first cooking apparatus 400-1 may be configured to transmit, based on the first cooking step being determined as completed, the information on the change in progress step according to the comprehensive recipe guide to the electronic apparatus 100 (S1145). The electronic apparatus 100 may be configured to transmit, based on the information on the change in progress step, the control signal to another cooking apparatus for performing a next cooking step (S1160). For example, based on performing an operation of the second cooking apparatus 400-2 being required in the second cooking step which is the next step of the first cooking step, the electronic apparatus 100 may be configured to transmit the control signal corresponding to the second cooking step to the second cooking apparatus 400-2. The second cooking apparatus 400-2 may be configured to perform an operation corresponding to the control signal based on the received control signal (S1170).

The electronic apparatus 100 may not transmit the control signal (S1190) to the second cooking apparatus 400-2 based on identifying that performing an operation of the second cooking apparatus 400-2 is not required in the next cooking step based on the information on the change in progress step (S1155) received from the first cooking apparatus 400-1.

The first cooking apparatus 400-1 may be configured to transmit the information on the change in progress step to the electronic apparatus 100 only at the step where performing an operation of another cooking apparatus is required.

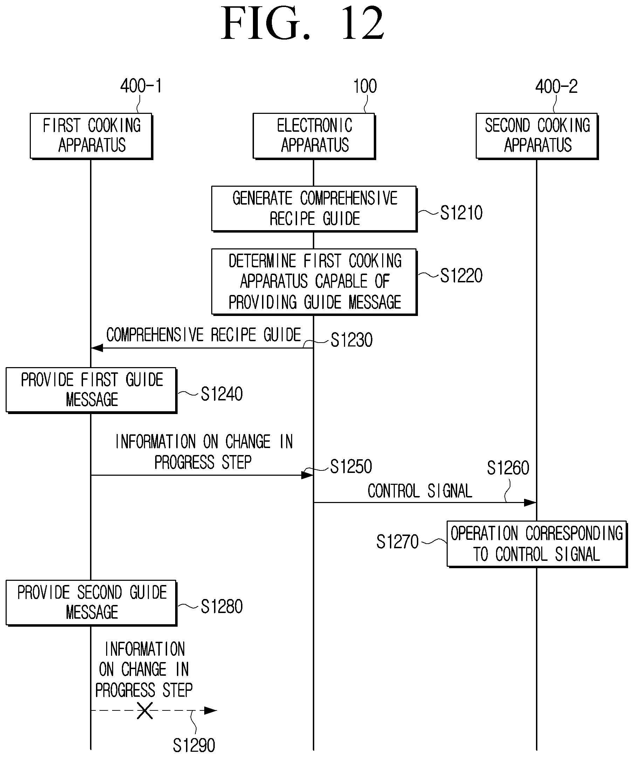

FIG. 12 is a sequence diagram illustrating an operation of an electronic apparatus providing a comprehensive recipe guide to a first cooking apparatus capable of providing a guide message to a user, and a first cooking apparatus transmitting information on a change in progress step to the electronic apparatus only when there is a need for control of another cooking apparatus when changing a cooking step based on the comprehensive recipe guide according to an embodiment.

Referring to FIG. 12, a first cooking apparatus 400-1 may be configured to transmit information on a change in progress step to an electronic apparatus 100 when there is a need for performing an operation of a second cooking apparatus 400-2 in a next step when changing a cooking step (S1250). The electronic apparatus 100 may be configured to transmit the control signal to the second cooking apparatus 400-2 based on the received information on the change in progress step (S1260), and the second cooking apparatus may be configured to perform an operation corresponding to the control signal (S1270).

The first cooking apparatus 400-1 may not transmit the information on the change in progress step to the electronic apparatus 100 based on identifying that performing an operation of the second cooking apparatus 400-2 is not required in the next cooking step based on the comprehensive recipe guide (S1290).

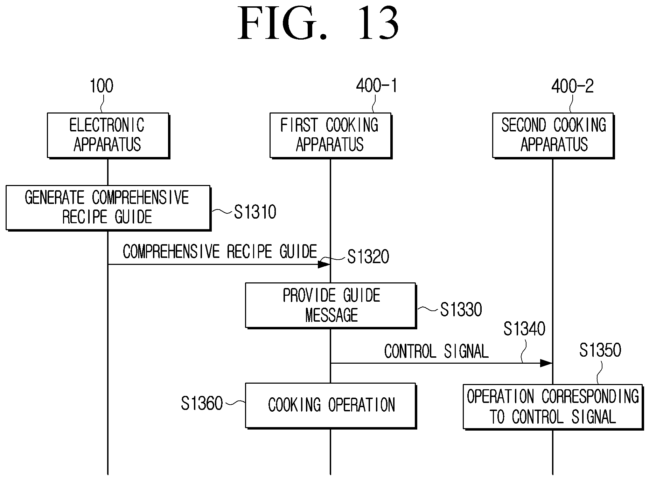

FIG. 13 is a sequence diagram illustrating an operation of a first cooking apparatus transmitting a control signal to another cooking apparatus according to a comprehensive recipe guide when an electronic apparatus provides the comprehensive recipe guide to the first cooking apparatus according to an embodiment of the disclosure.

According to an embodiment of FIG. 13, a first cooking apparatus 400-1 may be configured to receive a comprehensive recipe guide (S1310) generated from the electronic apparatus 100 (S1320), and provide a guide message (S1330) and perform a cooking operation (S1360) according to the comprehensive recipe guide.

Further, the first cooking apparatus 400-1 may be configured to transmit the control signal to another cooking apparatus based on the comprehensive recipe guide. For example, the first cooking apparatus 400-1 may be configured to transmit the control signal (S 1340) for controlling the second cooking apparatus 400-2, and the second cooking apparatus 400-2 may be configured to perform an operation corresponding thereto (S1350) based on the control signal received from the first cooking apparatus 400-1. Accordingly, the first cooking apparatus 400-1 may be configured to perform a role of a hub which may integrally control the plurality of cooking apparatuses.

FIGS. 14 to 17 are diagrams illustrating an example of the first guide message UI, the second guide message UI, the third guide message UI, and the fourth guide message UI provided in FIG. 6, respectively.

A user in possession of cooking apparatuses such as a microwave, an induction, and an oven performing cooking on a `steak,' `bacon pasta,' and 'salad' is described below as an example to describe an example of the disclosure.

First, referring to FIG. 6, the electronic apparatus 100 may be configured to comprehensively analyze information on the cooking apparatuses possessed by the user, recipe information on the recipe to be cooked by the user, information on the food items currently possessed by the user, and the like, and generate the comprehensive recipe guide (S6010).

In this case, because the cooking apparatus 400 possessed by the user is the microwave 400-1 (hereinafter, first cooking apparatus), the induction 400-2 (hereinafter, second cooking apparatus), and the oven 400-3 (hereinafter, third cooking apparatus), the electronic apparatus 100 may be configured to obtain information on the three cooking apparatuses above from at least one from among the information stored in the server 300, the user terminal apparatus 200, or the memory 110, and generate the comprehensive recipe guide based on the obtained information. In addition, the recipe information on the 'steak,' the 'bacon pasta,' and the 'salad' may be obtained from the server 300, and the comprehensive recipe guide may be generated reflecting the obtained information.

For example, the comprehensive recipe guide may generate a series of information of defrosting a steak item by using the first cooking apparatus, guiding the user to make a salad during the time defrost is carried out, proceeding with induction cooking with respect to the steak item by using the second cooking apparatus when the defrosting of steak item is complete while simultaneously cooking pasta noodles in the bacon pasta by using the second cooking apparatus, proceeding with oven cooking with respect to the steak item by using the third cooking apparatus when induction cooking of the steak item is complete, completing the steak and the bacon past simultaneously by adding bacon in the bacon pasta to the pasta noodles by cooking using the third cooking apparatus, and providing with the salad to the user.

In another example, the comprehensive recipe guide may guide the user to buy lacking food items during the time defrosting with respect to the steak item is being carried out by the first cooking apparatus. In this case, the electronic apparatus 100 may be configured to obtain information on the closest supermarket from the current location of the user based on GPS, user location information, or the like, to provide a purchase guide on food items to the user. The electronic apparatus 100 may be configured to calculate an estimated time spent necessary for purchasing food items based on distance information, and provide information comparing the above with the steak item defrosting time to the user.

The electronic apparatus 100 may be configured to transmit the first guide message to the user terminal apparatus 200 (S6020) based on the comprehensive recipe guide, and the user terminal apparatus 200 may be configured to provide the first guide message to the user (S6030)

In this case, the user terminal apparatus 200 may be configured to provide a UI requesting performing of a specific operation to the user in the preparation section which requires user action.

For example, referring to FIG. 14, the user terminal apparatus 200 may be configured to display a UI 1410 associated with cooking steak. The UI 1410 may include an area for identifying the recipe which is the subject of cooking1411, an area displaying the operation requested to the user 1412, and an area for inputting whether the user has completed performing the operation 1413.

The area displaying the operation requested to the user 1412 may include information on the recipe such as the cooking method, the cooking time, and the cooking temperature, and guide the specific cooking method to the user.

The electronic apparatus 100 may be configured to receive an operation performance complete signal of the user from the user terminal apparatus 200, and proceed with the next cooking step. However, the embodiment is not limited thereto, and the electronic apparatus 100 may be configured to automatically proceed with the next cooking step when a pre-set time passes.

Further, referring back to FIG. 6, the electronic apparatus 100 may be configured to transmit, based on the cooking section which requires the operation of the first cooking apparatus 400-1 being started based on the comprehensive recipe guide, the first control signal to the first cooking apparatus 400-1 (S6040), and the first cooking apparatus 400-1 may be configured to perform an operation corresponding to the first control signal (S6050).

In this case, the electronic apparatus 100 may be configured to transmit the first control signal which controls first cooking apparatus 400-1 to operate based on the temperature and time decided by the comprehensive recipe guide to the first cooking apparatus 400-1. The first cooking apparatus 400-1 may be configured to perform the operation corresponding to the first control signal received from the electronic apparatus 100.

For example, the electronic apparatus 100 may be configured to transmit the first control signal including information on the microwave defrosting time calculated based on the type and weight of the steam item to the first cooking apparatus 400-1, and the first cooking apparatus 400-1 may be configured to defrost the steak item provided by the user by operating during the corresponding time.

Further, the electronic apparatus 100 may be configured to transmit, based on the comprehensive recipe guide, the second guide message to the user terminal apparatus 200 (S6060), and the user terminal apparatus 200 may be configured to provide the second guide message to the user (S6070). In this case, the user terminal apparatus 200 may be configured to provide a UI requesting performing of a specific operation to the user.

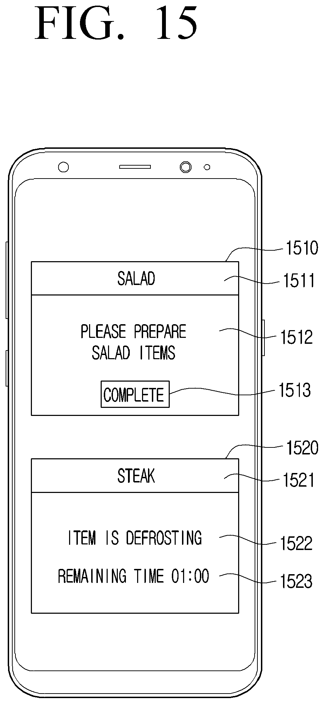

For example, referring to FIG. 15, the user terminal apparatus 200 may be configured to display a UI associated with preparing salad 1510 and a UI associated with cooking steak 1520. The UI associated with preparing salad 1510 may include an area for identifying the recipe which is the subject of cooking1511, an area displaying the operation requested to the user 1512, and an area for inputting whether the user has completed performing the operation 1513.

The area displaying the operation requested to the user 1512 may include information on the recipe such as items going into the salad and preparation method, and may guide the specific cooking method to the user.

In addition, the UI associated with cooking steak 1520 may include an area for identifying the recipe which is the subject of cooking 1521 and an area displaying a cooking progress situation of the recipe 1522. For example, in the case of a steak, because the defrosting operation of the steak item has been started and is underway by the first cooking apparatus 400-1 in the previous cooking step, the progress situation 1522 and a remaining time 1523 until the completion of operation may be displayed in the UI associated with cooking steak 1520.

The user terminal apparatus 200 may be configured to display the UI providing cooking progress information on the respective recipes. For example, the user terminal apparatus 200 may be configured to display an extent of cooking progress and rate of progress on the respective recipes (e.g., information of salad being 1/4 step in progress, with a progress rate of 25%, and steak being 1/10 step in progress, with a progress rate of 10%) at an upper end (e.g., upper end of the UI associated with preparing salad in FIG. 15) of the display. The UI providing cooking progress information may be displayed as a separate popup window, and displayed within the UI associated with the cooking of the respective recipes.

Accordingly, a real-time cooking progress situation may be notified intuitively to the user.

Further, referring to FIG. 6, the electronic apparatus 100 may be configured to transmit, based on the comprehensive recipe guide, the third guide message to the user terminal apparatus 200 (S6080), and the user terminal apparatus 200 may be configured to provide the third guide message to the user (S6090).

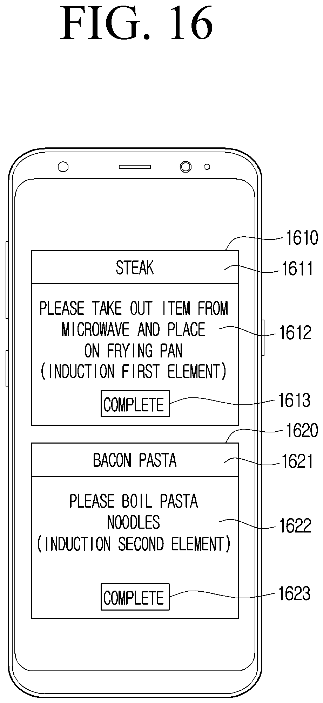

For example, referring to FIG. 16, the user terminal apparatus 200 may be configured to display a UI associated with cooking steak 1610 and a UI associated with cooking bacon pasta 1620. The respective UIs 1610 and 1620 may include areas for identifying the recipes which are the subjects of cooking 1611 and 1621, areas displaying the operations requested to the user 1612 and 1622, and areas for inputting whether the user has completed performing the operations 1613 and 1623.

The areas displaying the operations requested to the user 1612 and 1622 may include information on the areas of the cooking apparatuses used for cooking the respective recipes, and may guide the specific cooking method to the user. For example, because cooking of steak and bacon pasta are both performed by using an induction in the corresponding cooking step, a guiding message may be displayed to the user so that cooking with respect to the steak is performed using an induction first element and cooking with respect to the bacon pasta is performed using an induction second element.

Further, referring to FIG. 6, the electronic apparatus 100 may be configured to transmit, based on the comprehensive recipe guide, the second control signal to the second cooking apparatus 400-2 (S6100), and the second cooking apparatus 400-2 may be configured to perform the operation corresponding to the second control signal (S6110)

In this case, the electronic apparatus 100 may be configured to transmit the second control signal which controls the second cooking apparatus 400-2 to operate based on the temperature and time decided by the comprehensive recipe guide to the second cooking apparatus 400-2. The second cooking apparatus 400-2 may be configured to perform the operation corresponding to the first control signal received from the electronic apparatus 100.

For example, because the steak is cooked by using the first element of the induction which is the second cooking apparatus 400-2, and the bacon pasta is cooked by using the second element of the induction which is the second cooking apparatus 400-2, the electronic apparatus 100 may be configured to control the second cooking apparatus 400-2 to perform the cooking operation by applying the cooking temperature and the cooking time corresponding to the recipe being cooked in the respective parts by the second cooking apparatus 400-2.

The electronic apparatus 100 may be configured to transmit, based on the comprehensive recipe guide, a third control signal to the third cooking apparatus 400-3 (S6120), and the third cooking apparatus 400-3 may be configured to perform the operation corresponding to the third control signal (S6130).

For example, the comprehensive recipe guide may include information on proceeding with oven cooking after induction cooking of steak. In this case, the comprehensive recipe guide may include information on proceeding with a preheating operation with respect to the third cooking apparatus 400-3 which corresponds to the oven.

In this case, the electronic apparatus 100 may be configured to transmit, based on the comprehensive recipe guide including information on a setting temperature, setting time, and the like of the third cooking apparatus 400-3, the third control signal which controls the cooking temperature of the third cooking apparatus 400-3 to be set at a specific temperature at a pre-set time to the third cooking apparatus 400-3.

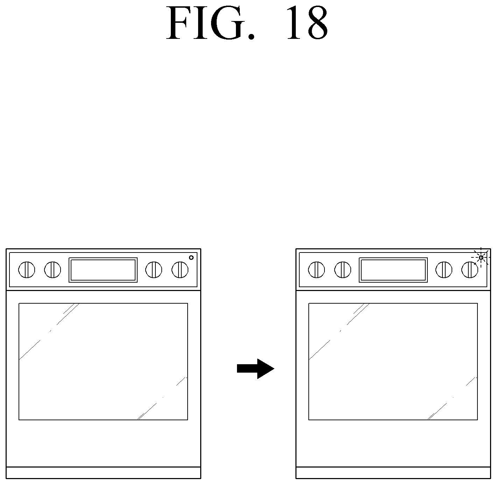

Accordingly, referring to FIG. 18, the third cooking apparatus 400-3 may be configured to perform the preheating operation by receiving the third control signal from the electronic apparatus 100.

Based on the above, the electronic apparatus 100 may be configured to reduce to total time spent on cooking by controlling the cooking apparatus to automatically proceed with an operation which is to be performed in advance prior to the specific cooking step such as the preheating operation of the cooking apparatus.

Further, referring to FIG. 6, the electronic apparatus 100 may be configured to transmit, based on the comprehensive recipe guide, the fourth guide message to the user terminal apparatus 200 (S6140), and the user terminal apparatus 200 may be configured to provide the fourth guide message to the user (S6150).

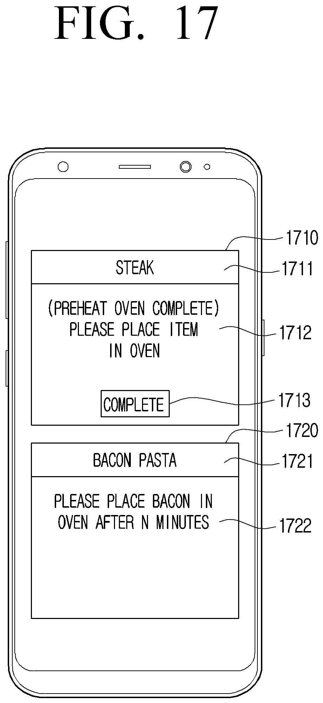

For example, referring to FIG. 17, the user terminal apparatus 200 may be configured to display a UI associated with cooking steak 1710 and a UI associated with cooking bacon pasta 1720. The respective UIs 1710 and 1720 may include areas for identifying the recipes which are the subjects of cooking 1711 and 1721, areas displaying operations requested to the user 1712 and 1722, and the area for inputting whether the user has completed performing the operation 1713.

Referring to FIG. 17, the UI associated with cooking steak 1710 may display guiding content to perform oven cooking which is the next step after completing induction cooking with respect to the steak item.

The UI associated with cooking bacon pasta 1720 may display guiding content to perform an operation of placing bacon in the oven after N minutes to cook the bacon which is one from among the items in the bacon pasta.

Here, the information on the time for placing the bacon in the oven may be decided so that cooking with respect to the bacon is completed when the oven operation is completed taking into consideration the cooking time of the bacon and the operation completion time of the oven according to the completion of cooking steak.

Accordingly, the electronic apparatus 100 may be configured to provide a cooking method optimized to the recipe selected by the user taking into consideration the characteristics of the respective recipes and the characteristic of the cooking apparatus.

FIG. 18 is a diagram illustrating a control on a cooking apparatus by an electronic apparatus according to an embodiment.

The electronic apparatus 100 may be configured to control the cooking apparatus based on the comprehensive recipe guide. For example, referring to FIG. 18, the electronic apparatus 100 may be configured to control so that the preheating operation of the oven is carried out at a specific time based on the comprehensive recipe guide. Because controlling the cooking apparatus by the electronic apparatus 100 has been described in detail in FIG. 6, redundant descriptions will be omitted.

However, the control operation of the cooking apparatus 400 by the electronic apparatus 100 is not limited thereto, and the electronic apparatus 100 may be configured to control cooking apparatuses 400 of various types, and control the cooking apparatus 400 in different methods according to the type of the cooking apparatus 400.

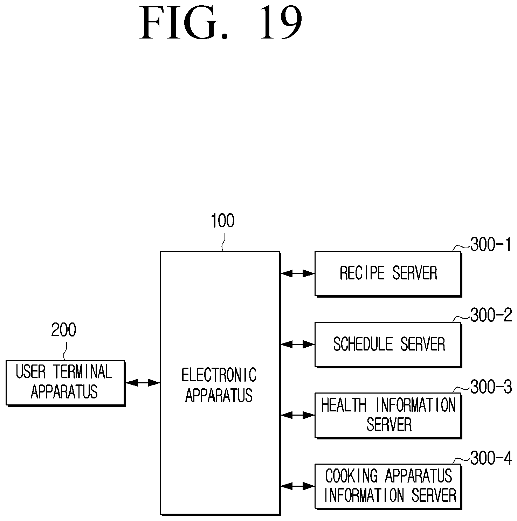

FIG. 19 is a diagram illustrating a method of generating a user customized recipe according to an embodiment.

The electronic apparatus 100 may be configured to obtain private user information from the server 300 through the communication interface 120, and generate a user customized recipe based on the obtained private user information.

Here, the user customized recipe may refer to a recipe which modified a standard recipe for the respective foods based on private user information such as a food preference of the user, health information, information on the items possessed, activity information, and information on the cooking apparatuses possessed.

For example, the electronic apparatus 100 may be configured to provide a recipe which reduced fat content based on the user preferring low fat recipes, or provide a recipe which reduced sodium content based on information on a health state of the user. In this case, the electronic apparatus 100 may be configured to obtain information on the food preferences of the user from the user terminal apparatus 200, or obtain information on the health state of the user from a health information server 300-3.

In addition, the electronic apparatus 100 may be configured to provide, based on an energy consumption of the user being low, a recipe with reduced calories to correspond thereto. For example, the electronic apparatus 100 may be configured to obtain information on the energy consumption of the user from the user terminal apparatus such as a wearable device which includes the function of measuring calories consumed by the user, and provide a recipe modified to provide calories corresponding to the calories consumed by the user by obtaining information on the calories ingested through the recipe from a recipe server 300-1.

In addition, the electronic apparatus 100 may be configured to provide a recipe modified so as to cook with the cooking apparatus possessed by the user based on information on the cooking apparatus possessed by the user. For example, based on the user possessing only the induction and not possessing the oven, a recipe modified so as to cook the same food by using the induction and not the oven may be provided. In this case, the electronic apparatus 100 may be configured to obtain information on the cooking apparatus possessed by the user from the user terminal apparatus 200 or a cooking apparatus information server 300-4.

The electronic apparatus 100 may be configured to search the cooking apparatuses capable of communicating with the user terminal apparatus 200 and provide a search result to the user terminal apparatus 200 through the communication interface 120, and obtain information on the cooking apparatuses possessed by the user according to the user inputting a selection command on the cooking apparatus possessed by the user from among the searched cooking apparatuses. In this case, the electronic apparatus 100 may be configured to provide the recipe list including the recipes cookable by the plurality of cooking apparatuses selected by the selection command of the user.

In addition, the electronic apparatus 100 may be configured to recommend a recipe corresponding to an event included in a schedule of the user based on private information such as the user schedule. For example, the electronic apparatus 100 may be configured to obtain schedule information of the user from a schedule server 300-2, and based on there being an event such as a birthday or an anniversary of the user, provide the user with the recipe list corresponding to the respective events.

In addition, the electronic apparatus 100 may be configured to provide the user with the recipe list which may be cooked using the items possessed based on information on the items possessed by the user. In this case, the electronic apparatus 100 may be configured to obtain information on the items possessed by the user from the apparatus storing food items such as a smart refrigerator.

Accordingly, the electronic apparatus 100 may be configured to enhance user convenience by providing a recipe list generated to match a personal characteristic of the user.

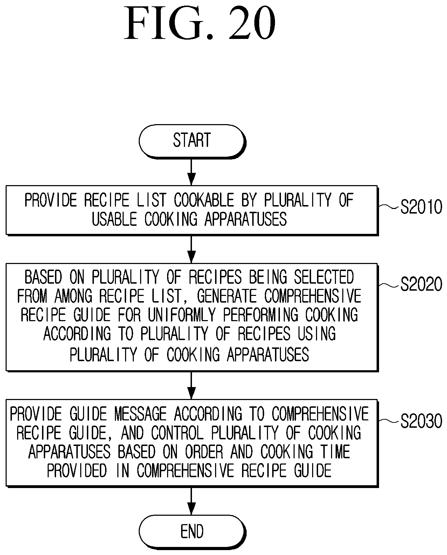

FIG. 20 is a flowchart illustrating a control method of an electronic apparatus according to an embodiment of the disclosure.

An electronic apparatus 100 may be configured to provide a recipe list cookable by a plurality of usable cooking apparatuses (S2010).

Further, the electronic apparatus 100 may generate, based on a plurality of recipes being selected from among the recipe list, a comprehensive recipe guide for uniformly performing cooking according to the plurality of recipes using the plurality of cooking apparatuses (S2020).

In this case, the electronic apparatus 100 may be configured to set a priority order of the respective recipes based on the characteristics of the cuisine which is made based on the plurality of recipes, and generate a comprehensive recipe guide by deciding the completion order of the plurality of recipes differently according to the priority order.

The electronic apparatus 100 may be configured to provide a search result by searching the cooking apparatuses capable of communicating with the electronic apparatus 100, receive the selection command on the plurality of cooking apparatuses 400 from among the searched cooking apparatuses, and generate a recipe list including recipes cookable by the plurality of cooking apparatuses 400 selected by the selection command.

Further, the electronic apparatus 100 may be configured to provide a guide message according to the comprehensive recipe guide, and control the plurality of cooking apparatuses based on the order and cooking time provided in the comprehensive recipe guide (S2030).

In this case, the electronic apparatus 100 may be configured to provide a guide message for guiding the user action in the preparation section which requires the user action in the comprehensive recipe guide, and transmit, based on the cooking section which requires an operation of at least one cooking apparatus being started in the comprehensive recipe guide, the control signal on the at least one cooking apparatus.

The electronic apparatus 100 may be configured to obtain private information of the user, and generate a user customized recipe by modifying the standard recipe for the respective foods based on the private user information, and the recipe list provided to the user may include the user customized recipe. In this case, the private user information may include at least one from among the food preferences of the user, health information, information on the items possessed, and activity information.

According to the various embodiments of the disclosure as described above, the electronic apparatus may be configured to enhance user convenience by providing the recipe list generated to match the personal characteristic of the user, providing a cooking method optimized to the recipe selected by the user, guiding the user action to perform cooking according to the recipe, and automatically control the cooking apparatus used in the cooking.

The electronic apparatus may be configured to not only control the cooking apparatus to provide cooked food according to the comprehensive recipe guide, but also control the dish washer to wash the cooking tools and dishes soiled according to being used in the cooking process after cooking is completed.

FIG. 21 is a sequence diagram illustrating an operation of an electronic apparatus providing a guide message to a user terminal apparatus by deciding a wash course according to a determination on a soiling degree, and transmitting a control signal to a dish washer according to an embodiment of the disclosure.

An electronic apparatus 100 may be configured to provide information to a user terminal apparatus 200, and control a dish washer 500 in the same method with FIG. 21.

First, the electronic apparatus 100 may be configured to decide the wash course of the dish washer 500 by determining the soiling degree of the cooking tools and dishes used in cooking after cooking according to the comprehensive recipe guide is completed (S2110).

Here, the electronic apparatus 100 may be configured to determine, based on recipe information of the respective recipes cooked based on the comprehensive recipe guide, the soiling degree of the cooking tools and dishes used in cooking. The recipe information may include food item information and cooking tool and dish information for performing cooking according to the recipe.

The electronic apparatus 100 may be configured to estimate the soiling degree of the cooking tools and dishes through the used food item information and cuisine type information. For example, in the case of a steak recipe, because washing of a high degree is necessary due to oil being used in the cooking process, cooking tools such as the frying pan used for cooking steak and the dish which contained steak may be estimated as having a high soiling degree. On the other hand, in the case of a salad recipe, because food items including oil is small, the dish which contained the salad may be estimated as having a low soiling degree.

The electronic apparatus 100 may be configured to control the dish washer 500 to perform the wash operation according to the wash course of the dish washer corresponding to the soiling degree of the respective cooking tools and dishes based on the determined soiling degree. For example, the electronic apparatus 100 may be configured to control the dish washer 500 to perform the wash operation by controlling a spray force and the like of a liquid detergent with which washing may be carried out smoothly according to water temperature and viscosity of cooked food that oil may be best degraded based on the soiling degree of the cooking tools and dishes.

In this case, the electronic apparatus 100 may be configured to transmit the guide message for guiding the user action to be performed for washing the cooking tools and the dishes to the user terminal apparatus 200 (S2120) so that the user terminal apparatus 200 may provide the guide message to the user (S2130). For example, the electronic apparatus 100 may be configured to provide the user with the guide message guiding to arrange the cooking tools and dishes to a specific area in the dish washer.

The user terminal apparatus 200 may be configured to receive the user input that the dish arrangement in the dish washer 500 has been completed from the user who received the guide message. In this case, the user terminal apparatus 200 may be configured to transmit a dish arrangement complete signal to the electronic apparatus 100 (S2140). The electronic apparatus 100 may be configured to transmit, based on receiving the dish arrangement complete signal, the control signal of controlling the dish washer 500 based on the decided wash course to the dish washer 500 (S2150), and the dish washer 500 may be configured to perform the wash operation corresponding to the received control signal (S2160).

Accordingly, the electronic apparatus 100 may be configured to guide the user action necessary for performing the wash operation, and enhance user convenience by controlling the dish washer by automatically determining the wash course according to the soiling degree.

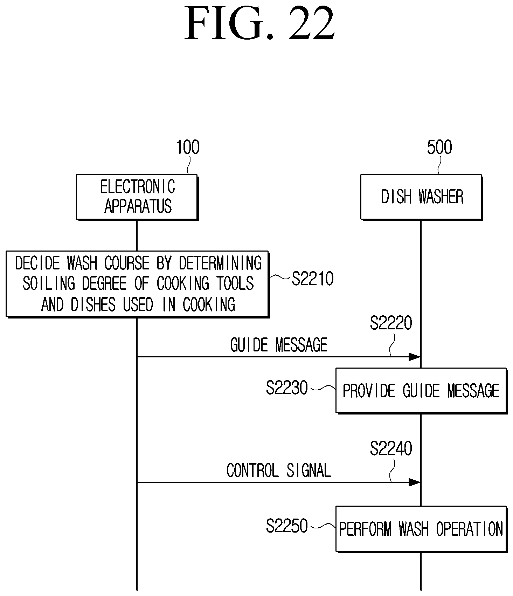

The operation of providing the guide message to the user and controlling the dish washer is not limited to the above-described embodiment, and may include various embodiments. The operation of the electronic apparatus and the dish washer according to another example of the disclosure will be described below with reference to FIG. 22 to FIG. 24.

FIG. 22 is a sequence diagram illustrating an example of an electronic apparatus providing a guide message through a dish washer according to an embodiment of the disclosure.

Referring to FIG. 22, an electronic apparatus 100 may be configured to provide a guide message to a dish washer 500 or another home appliance provided with an output interface such as a display or a speaker. The device which receives the guide message may be configured to provide the message in text or voice to a user.

First, the electronic apparatus 100 may be configured to decide the wash course by determining the soiling degree of the cooking tools and dishes used in cooking after cooking according to the comprehensive recipe guide is completed (S2210), transmit the guide message guiding the user action to be performed for washing the cooking tools and the dishes to the dish washer 500 (S2220) so that the dish washer 500 may provide the guide message to the user (S2230).

Further, the electronic apparatus 100 may be configured to transmit, based on determining that the user action according to the guide message is completed (e.g., based on receiving the dish arrangement complete signal from the dish washer 500), the control signal controlling the dish washer 500 based on the decided wash course to the dish washer 500 (S2240), and the dish washer 500 may be configured to perform the wash operation corresponding to the received control signal (S2250).

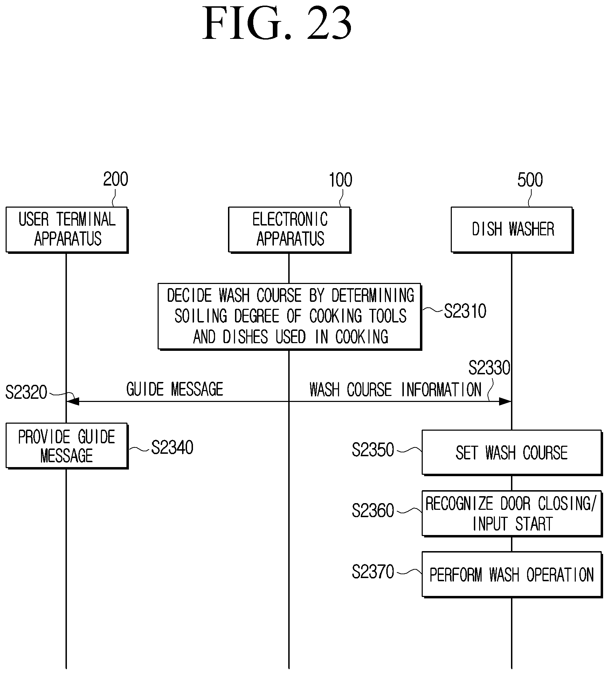

FIG. 23 is a sequence diagram illustrating an example of an electronic apparatus providing a guide message through a user terminal apparatus, and transmitting information on a wash course to a dish washer according to an embodiment of the disclosure.

Referring to FIG. 23, an electronic apparatus 100 may be configured to decide a wash course by determining a soiling degree of cooking tools and dishes used in cooking after the cooking according to the comprehensive recipe guide is completed (S2310), and transmit a guide message for guiding a user action to be performed for washing the cooking tools and the dishes to a user terminal apparatus 200 (S2320) so that the user terminal apparatus 200 may provide the guide message to a user (S2340) (S2330).

In addition, the electronic apparatus 100 may be configured to transmit the decided wash course information to the dish washer 500 (S2330). The dish washer 500 may be configured to set the wash course based on the wash course information received from the electronic apparatus 100 (S2350). Further, the dish washer 500 may be configured to perform the wash operation corresponding to the set wash course (S2370) by recognizing the closing of the door, or receiving a start input by the user to execute the wash course (S2360).

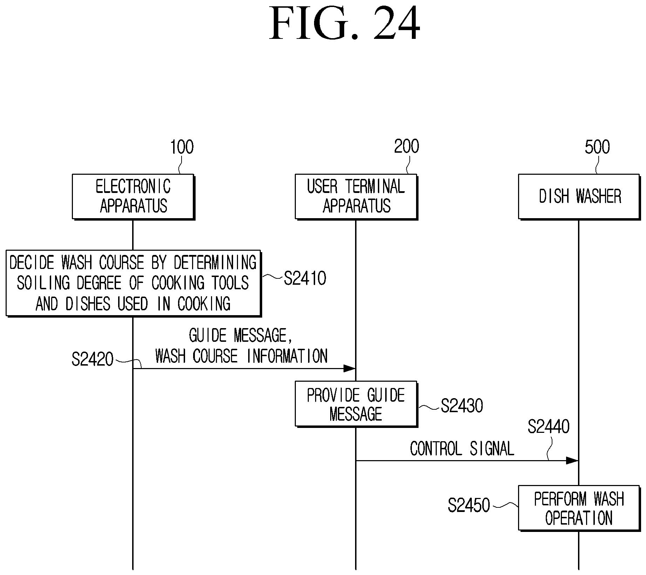

FIG. 24 is a sequence diagram illustrating an example of an electronic apparatus transmitting a guide message and information on a wash course to a user terminal apparatus, and the user terminal apparatus transmitting a control signal corresponding thereto to a dish washer according to an embodiment of the disclosure.

Referring to FIG. 24, an electronic apparatus 100 may be configured to decide a wash course by determining a soiling degree of cooking tools and dishes used in cooking after the cooking according to the comprehensive recipe guide is completed (S2410), and transmit the guide message corresponding to the decided wash course and the wash course information to a user terminal apparatus 200 (S2420).

The user terminal apparatus 200 may be configured to provide the guide message for guiding the user action to be performed for washing the cooking tools and the dishes based on the received guide message and the wash course information (S2430).

Accordingly, the user may check the wash course information through the user terminal apparatus 200. In addition, based on the user inputting the user command (e.g., dish arrangement complete input or wash start input) for performing the wash operation through the UI of the user terminal apparatus 200 after completing the dish arrangement, the user terminal apparatus 200 may be configured to transmit an instruction to perform the wash operation including the wash course information to the dish washer 500. In this case, the wash course information may include the control signal for controlling the wash operation of the dish washer 500.

For example, referring to FIG. 24, the user terminal apparatus 200 may be configured to transmit the control signal controlling the dish washer 500 based on the received wash course to the dish washer 500 (S2440). In this case, the user terminal apparatus 200 may be configured to directly transmit the control signal to the dish washer 500 by using a short range communication such as Wi-Fi, Wi-Fi direct, Bluetooth, and near field communications (NFC), or transmit through the server 300.

Accordingly, the dish washer 500 may be configured to perform the wash operation corresponding to the control signal received from the user terminal apparatus 200 (S2450).

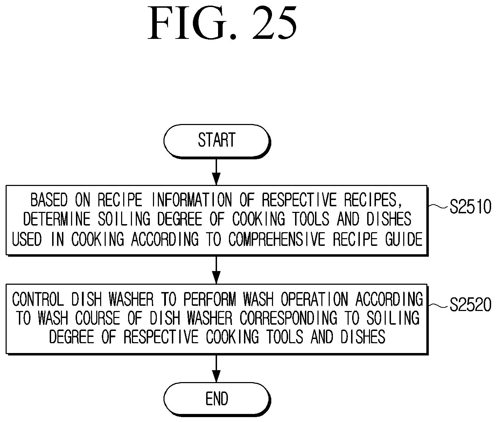

FIG. 25 is a flowchart illustrating a control method of controlling a dish washer by an electronic apparatus according to an embodiment of the disclosure.

An electronic apparatus 100 may be configured to determine, based on recipe information of respective recipes, a soiling degree of cooking tools and dishes used in cooking according to the comprehensive recipe guide (S2510). Further, the electronic apparatus 100 may be configured to control a dish washer to perform a wash operation according to the wash course of the dish washer corresponding to the soiling degree of the respective cooking tools and dishes (S2520).

In this case, the electronic apparatus 100 may be configured to control the dish washer to set a wash course corresponding to a highest soiling degree from among the determined soiling degrees. By proceeding with washing in the wash course corresponding to the highest soiling degree, all cooking tools and dishes which are subject to washing may be washed to a same level.

The electronic apparatus 100 may be configured to provide the guide message guiding the user to arrange the cooking tools and the dishes at different areas from one another in the dish washer according to the determined soiling degree, and control the dish washer to set the wash course corresponding to the determined soiling degree for the respective areas of the dish washer. The electronic apparatus 100 may be configured to guide the cooking tools and the dishes with the similar soiling degree to be arranged in the same area in the dish washer, and control the dish washer to proceed with the wash course corresponding to the soiling degree and washing in a water pressure according to the area of the dish washer.

For example, the electronic apparatus 100 may be configured to guide the dish which contained steak and the frying pan to be arranged at a lower part of the basket in the dish washer because the soiling degree estimated is high based on the use of oil, and guide the dish which contained the salad to be arranged at an upper part of the basket in the dish washer because the soiling degree estimated is low. Further, the electronic apparatus 100 may be configured to control the dish washer so that the lower part of the basket in which the cooking tools and dishes estimated to have a high soiling degree are arranged is strongly sprayed with washing water, and the upper part of the basket in which the cooking tools and dishes estimated to have a low soiling degree are arranged is weakly sprayed with washing water.

In addition, based on the cooking tools and dishes having different soiling degrees being arranged in the same basket, one side may be guided to arrange the cooking tools and dishes with the high soiling degree and the other side may be guided to arrange the cooking tools and dishes with the low soiling degree, and the dish washer may be controlled to set the wash course corresponding to the soiling degree for the respective areas in the dish washer by controlling pressure and amount of the washing water which is sprayed left to right and front to back according to the soiling degree of the arranged cooking tools and dishes.

Accordingly, by setting the wash course corresponding thereto based on the soiling degree and not applying the wash course uniformly to all cooking tools and dishes, power wastage which may be generated by applying a strong wash course to the dishes with low soiling degree may be prevented.

The methods according to the various embodiments of the disclosure as described above, may be realized in a software or application form installable in the electronic apparatus such as the user terminal apparatus.

In addition, the methods according to the various embodiments of the disclosure as described above, may be realized with only a software upgrade or a hardware upgrade on the electronic apparatus of the related art.

In addition, the various embodiments of the disclosure as described above may be performed through an embedded server provided in the electronic apparatus, or a server outside of the electronic apparatus.

A non-transitory computer readable medium stored with a program configured to sequentially perform a document analysis method according to the disclosure may be provided.

The non-transitory computer readable medium may refer to a medium that stores data semi-permanently rather than storing data for a very short time, such as a register, a cache, a memory, or the like, and is readable by a device. Specifically, the various applications or programs described above may be stored and provided in the non-transitory computer readable medium such as, for example, and without limitation, a compact disc (CD), a digital versatile disc (DVD), a hard disc, a Blu-ray disc, a USB, a memory card, a ROM, and the like.

While the disclosure has been shown and described with reference to various embodiments thereof, it will be understood that the various embodiments are intended to be illustrative, not limiting. It will be understood by those skilled in the art that various changes in form and details may be made therein without departing from the true spirit and full scope of the disclosure, including the appended claims and their equivalents.

## Claims

1. An electronic apparatus configured to control a plurality of cooking apparatuses, comprising:
a communication interface; and
a processor configured to control the plurality of cooking apparatuses through the communication interface and provide information to a user terminal apparatus,
wherein the processor is configured to:
generate, based on receiving a user command selecting a plurality of recipes, a comprehensive recipe guide to uniformly perform cooking according to the plurality of recipes using the plurality of cooking apparatuses,
provide a guide message according to the comprehensive recipe guide to the user terminal apparatus, and
control the plurality of cooking apparatuses based on an order and cooking time provided in the comprehensive recipe guide.

2. The electronic apparatus of claim 1, wherein the processor is configured to:
set, based on a characteristic of a cuisine which is created based on the plurality of recipes, a priority order of the plurality of recipes, and
determine a completion order of the plurality of recipes differently according to the priority order.

3. The electronic apparatus of claim 1, wherein the processor is configured to:
provide a search result to the user terminal apparatus by searching cooking apparatuses capable of communicating with the user terminal apparatus,
receive a selection command on the plurality of cooking apparatuses from among the searched cooking apparatuses, and
generate a recipe list comprising recipes cookable by the plurality of cooking apparatuses selected by the selection command.

4. The electronic apparatus of claim 1, wherein the processor is configured to:
provide, to the user terminal apparatus, a guide message to guide a user action in a preparation section which requires the user action in the comprehensive recipe guide, and
control, based on a cooking section which requires an operation of at least one cooking apparatus guide being started in the comprehensive recipe, the communication interface to transmit a control signal on the at least one cooking apparatus.

5. The electronic apparatus of claim 3, wherein the processor is configured to:
obtain private user information from a server through the communication interface, and
generate a user customized recipe by modifying a standard recipe for respective foods based on the private user information,
wherein the recipe list comprises the user customized recipe.

6. The electronic apparatus of claim 5, wherein the private user information comprises at least one of food preferences of a user, health information, information on items possessed, or activity information.

7. The electronic apparatus of claim 1, wherein the processor is configured to:
determine, based on recipe information of the plurality of recipes, a soiling degree of cooking tools and dishes used in cooking according to the comprehensive recipe guide, and
control a dish washer to perform a wash operation according to a wash course of the dish washer corresponding to the soiling degree of the cooking tools and dishes used in the cooking.

8. The electronic apparatus of claim 7, wherein the processor is configured to control the dish washer to set a wash course corresponding to a highest soiling degree from among the determined soiling degrees.

9. The electronic apparatus of claim 7, wherein the processor is configured to:
provide, to the user terminal apparatus, a guide message guiding the cooking tools and the dishes to be arranged in different areas in the dish washer according to the determined soiling degree, and
control the dish washer to set a wash course corresponding to the soiling degree by the different areas in the dish washer.

10. The electronic apparatus of claim 7, wherein the recipe information comprises food item information and cooking tool and dish information to perform cooking according to a recipe.

11. A control method of an electronic apparatus configured to control a plurality of cooking apparatuses, the method comprising:
generating, based on a plurality of recipes being selected, a comprehensive recipe guide to uniformly perform cooking according to the plurality of recipes using the plurality of cooking apparatuses;
providing a guide message according to the comprehensive recipe guide; and controlling the plurality of cooking apparatuses based on an order and cooking time provided in the comprehensive recipe guide.

12. The method of claim 11, wherein the generating of the comprehensive recipe guide comprises:
setting, based on a characteristic of a cuisine which is made based on the plurality of recipes, a priority order of the plurality of recipes; and
deciding a completion order of the plurality of recipes differently according to the priority order.

13. The method of claim 11, further comprising:
providing a search result by searching cooking apparatuses capable of communicating with the electronic apparatus;
receiving a selection command on the plurality of cooking apparatuses from among the searched cooking apparatuses; and
generating a recipe list comprising recipes cookable by the plurality of cooking apparatuses selected by the selection command.

14. The method of claim 11, wherein the controlling of the plurality of cooking apparatuses comprises:
providing a guide message to guide a user action in a preparation section which requires the user action in the comprehensive recipe guide; and
transmitting, based on a cooking section which requires an operation of at least one cooking apparatus being started in the comprehensive recipe guide, a control signal on the at least one cooking apparatus.

15. The method of claim 13, comprising:
obtaining private user information; and
generating a user customized recipe by modifying a standard recipe for respective foods based on the private user information,
wherein the recipe list comprises the user customized recipe.
